(19) Europäisches Patentamt
European Patent Office
Office européen des brevets

(11) **EP 1 726 572 B1**

(12) **EUROPÄISCHE PATENTSCHRIFT**

(45) Veröffentlichungstag und Bekanntmachung des Hinweises auf die Patenterteilung:
**08.04.2009 Patentblatt 2009/15**

(51) Int Cl.:
*C03B 33/033* (2006.01)    *C03B 33/07* (2006.01)
*C03B 33/03* (2006.01)    *G02F 1/1333* (2006.01)

(21) Anmeldenummer: 06113789.9

(22) Anmeldetag: **11.05.2006**

(54) **Verfahren zum mechanischen Brechen von geritzten flachen Werkstücken aus sprödbrüchigem Material**

Process for mechanically breaking scored flat workpieces of brittle material

Procédé de rupture méchanique des pièces plates incisées en matériau fragile

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **27.05.2005 DE 102005024497**

(43) Veröffentlichungstag der Anmeldung:
**29.11.2006 Patentblatt 2006/48**

(73) Patentinhaber: **Schott AG**
**55122 Mainz (DE)**

(72) Erfinder: **Hoetzel, Bernd Christoph**
**55286 Wörrstadt (DE)**

(74) Vertreter: **Fuchs**
**Patentanwälte**
**Postfach 46 60**
**65036 Wiesbaden (DE)**

(56) Entgegenhaltungen:
**EP-A- 1 122 584        EP-A- 1 264 803**
**CH-A5- 626 596        DE-A1- 10 257 544**
**US-A1- 2003 019 897        US-A1- 2005 061 123**
**US-B1- 6 576 149**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zum mechanischen Brechen von nacheinander in zwei zueinander senkrecht stehenden Schneidrichtungen mit jeweils vorgegebenen Abständen parallel geritzten, flachen Werkstücken aus sprödbrüchigem Material, insbesondere Flachglas, mittels eines Brechwerkzeuges, bei dem zum Brechen entlang der einen Trennrichtung eine Brechrolle und zum Brechen entlang der anderen Trennrichtung ein Brechschwert eingesetzt wird.

Für zahlreiche technische Anwendungen werden kleine rechteckige Flachglas-Elemente in unterschiedlichen Abmessungen benötigt.

So werden bei der Einhausung von mikro- und optoelektronischen Bauelementen, wie Schwingquarze, SAW-Filter, CCD-Bauelemente, dem sogenannten "Electronic Packaging", unter anderem kleine Behältnisse verwendet, die an mindestens einer Seite ganz oder teilweise durch eine Dünnglasscheibe abgeschlossen sind. Häufig werden bei der Einhausung von mikro- und optoelektronischen Bauelementen auch Gehäusedeckel aus Dünnglas verwendet. Die Dicke s dieser kleinen Dünnglasscheiben liegt dabei typischerweise im Bereich

$$10 \ \mu m \leq s \leq 500 \ \mu m.$$

Kleine Dünnglasscheiben werden auch als Konstruktionsbauteile bei der Herstellung von mikroelektronischen und -mechanischen Bauteilen verwendet. So ist es beispielsweise aus der Patentschrift DE 196 49 332 bekannt, dass ein Schwingquarz direkt zwischen zwei Dünnglasscheiben positioniert und mit diesen verbunden wird.

Bei der Verwendung von Dünnglasscheiben als Verschlusselement einer Einhausung von mikro- und optoelektronischen Bauteilen sowie als Konstruktionselement von mikroelektronischen und -mechanischen Bauteilen erfolgt die Verbindungsbildung typischerweise durch Klebung oder Lötung. Im Falle der Lötung werden Metall- oder Glaslote als Fügematerial verwendet. In der überwiegenden Anzahl der Anwendungsfälle kommen dabei Glaslote zum Einsatz.

Eine weitere, besonders interessante technische Anwendung ist das Herstellen von kleinen rechteckigen Glasscheiben für Displays von elektronischen Geräten wie Handys, Digitalkameras, etc. Eine besondere Rolle nehmen dabei die sogenannten Displayzellen, welche aus zwei miteinander verklebten Glasscheibchen bestehen, ein. Das eine Glasscheibchen ist das TFT-Substrat (Thinfilmtransistor) und das andere das CF-Substrat (color front). Diese Glassubstrate sind typischerweise Borosilikatgläser mit einer Dicke zwischen 0,2 und 1,1 $\mu m$.

Die wirtschaftliche Herstellung derartiger, kleiner rechteckiger Glasscheiben erfolgt gemäß dem Stand der Technik typischerweise durch Zerteilen einer größeren rechteckigen Flachglastafel, wie es z. B. in der DE 100 16 628 A1 beschrieben wird. An die Kantenqualität werden dabei erhöhte Anforderungen gestellt, da diese entscheidenden Einfluss auf die Festigkeit der zerteilten Glasscheiben hat.

Aber auch die Displayzellen werden in einer entsprechenden Weise durch Zerteilen einer großen Doppel-Flachglastafel hergestellt, wie es z. B. in der US 4,277,143 beschrieben wird. Je nach dem Layout können aus einer Doppel-Flachglastafel bis zu 200 Displayzellen geschnitten werden, wobei die typische Displaygröße dem Displayformat von Handys entspricht.

Zum Zerteilen der jeweiligen Flachglastafel in die Rechtecke wird heute im großen Umfang das Schneiden mittels eines Laserstrahles angewendet. Diese Technik ist umfänglich bekannt und braucht daher hier nicht näher beschrieben zu werden. Es wird hierzu stellvertretend auf die EP 0 872 303 A2, US 5,609,284 und die EP 0 062 484 A1 Bezug genommen. Das Schneiden erfolgt dabei grundsätzlich in der Weise, dass ein Laserstrahl mit nachlaufendem Kühlspot mittels eines Scanners linienförmig entlang der vorgesehenen Trennlinie über die Flachglastafel geführt wird, derart, dass das Glas nicht durchschnitten, sondern durch das Induzieren einer thermomechanischen Spannung nur bis zu einer bestimmten Tiefe geritzt wird. Dabei erfolgt das Ritzen zunächst vollständig in einer Koordinatenrichtung und danach in der anderen dazu senkrecht stehenden Richtung. Anschließend wird die Glastafel entlang der Ritze, auf einem sogenannten Brechtisch liegend, typischerweise maschinell mechanisch gebrochen.

Bei einer Doppel-Flachglastafel für die Herstellung von Displayzellen wird zunächst die eine Flachglastafel und anschließend die andere geritzt und gebrochen.

Die Reihenfolge des Brechens entlang der beiden, aufeinander senkrecht stehenden Ritz- bzw. Schneidrichtungen bestimmt sich dabei vorteilhaft nach der DE 102 57 544 A1, d. h. die jeweilige Flachglastafel wird zuerst entlang der Ritze der zweiten Schneidvorrichtung und anschließend entlang der Ritze der ersten Schneidvorrichtung gebrochen. Es hat sich gezeigt, dass mit dieser Brechtechnik die Glastafeln mit hoher Bruchqualität und hoher Ausbeute in die gewünschten kleinen Rechteck-Elemente zerteilt werden können.

Das maschinelle Brechen der geritzten Flachglastafeln erfolgt gemäß der US 2005/0061123 A1 in bekannter Weise mittels eines sogenannten Brechschwertes in Verbindung mit einer Brechrolle. Ein derartiges Brechschwert besteht aus einer langgestreckten metallischen Klinge mit einer einseitigen Schneide, auf der typischerweise verschiedene Materialien, z. b. Hartgummi, eingesetzt werden, damit das Glas nicht beschädigt wird.

Die Brechkraft eines Brechschwertes, das maschinell mit geregelter Kraft auf die geritzte, mit der Ritzseite auf dem Brechtisch aufgespannte Glastafel nacheinander entlang der Ritze gedrückt wird, ist relativ hoch, wobei allerdings das Glas durch die ausgeübten "Schläge" relativ "hart" bricht. Im bekannten Fall wird ein sehr langes Brechschwert verwendet, welches sich über die vollständige Breite bzw. Länge der zu zerteilenden Flachglastafel erstreckt. Da im Interesse einer hohen Wirtschaftlichkeit die Abmessungen der zu zerteilenden Flachglastafeln bzw. Doppel-Flachglastafeln immer größer werden, müssen auch die Klingen der Brechschwerter entsprechend länger ausgebildet werden, was die Einhaltung der geforderten Genauigkeit, die im Bereich von 5 - 10 μm liegt, beeinträchtigt. Im bekannten Fall erfolgt dabei das Brechen entlang der einen Trennrichtung mittels der Brechrolle und das Brechen entlang der anderen Trennrichtung mittels des Brechschwertes.

Der Erfindung liegt die Aufgabe zugrunde, ausgehend von dem eingangs bezeichneten Verfahren dieses so zu führen, dass die geritzten flachen Werkstücke, insbesondere die Flachglastafeln, auf wirtschaftliche Weise mit durchgehend guter Bruchkantenqualität unter Einhaltung der geforderten hohen Genauigkeit mechanisch, insbesondere maschinell gebrochen werden können.

Die Lösung dieser Aufgabe gelingt gemäß der Erfindung mit einem Verfahren zum mechanischen Brechen von nacheinander in zwei zueinander senkrecht stehenden Trennrichtungen mit jeweils vorgegebenen Abständen parallel geritzten, flachen Werkstücken aus sprödbrüchigem Material mittels eines Brechwerkzeuges, bei dem zum Brechen entlang der einen Trennrichtung eine Brechrolle und zum Brechen entlang der anderen Trennrichtung ein Brechschwert eingesetzt wird, dadurch, dass die Schwertlänge des Brechschwertes kleiner als die kleinste horizontale Abmessung, nämlich Breite bzw. Länge, des zu zerteilenden flachen Werkstückes ist und dass das Brechschwert in vorgegebenen überlappenden Schritten entlang der zugehörigen Trennlinie eingesetzt wird.

Mit dem erfindungsgemäßen Verfahren können flache Werkstücke auf wirtschaftliche Weise und mit hoher Genauigkeit, die im Bereich von 5 - 10 μm liegt sowie hoher Bruchkantenqualität in kleinere flache Werkstücke zerteilt werden.

Ausgestaltungen und Weiterbildungen der Erfindung sind in Unteransprüchen gekennzeichnet sowie ergeben sich auch aus der Figurenbeschreibung.

Anhand eines in der Zeichnung dargestellten Ausführungsbeispiels wird die Erfindung näher beschrieben.

Es zeigen:

Fig. 1 in einer schematischen Draufsichtdarstellung eine Doppel-Flachglasplatte, die entlang aufeinander senkrecht stehenden Trennlinien in sechsunddreißig kleine Displayzellen zu zerteilen ist,

Fig. 2 in einer schematischen Seiten- und Schnittansicht eine Brechrolle zum Brechen der Flachglasplatte entlang der geritzten Trennlinie,

Fig. 3 eine Displayzelle in einer schematischen Querschnittansicht.

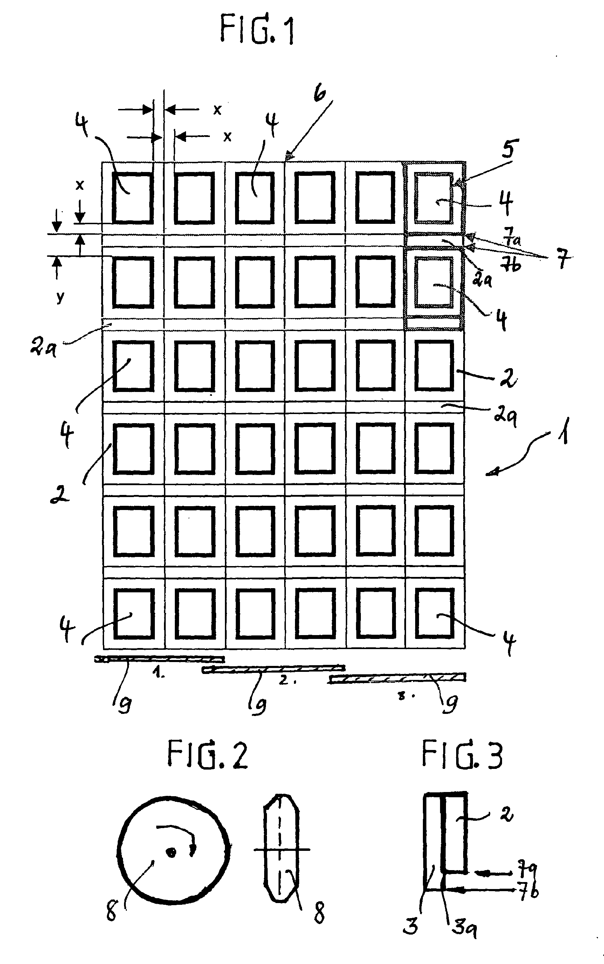

Die Figur 1 zeigt in einer Draufsicht eine Doppel-Flachglasplatte 1, die aus zwei miteinander verbundenen Flachglasplatten besteht, einer frontseitigen, z. B. mit einem Farbfilter versehenen Flachglasplatte 2 und einer verdeckten rückseitigen TFT-Flachglasplatte 3. Diese Doppel-Flachglasplatte 1 soll in sechsunddreißig Displayzellen 4 zerteilt werden, die im Bereich jeder späteren Displayzelle rahmenartig mittels eines Klebers (oder eines Glaslotes) verbunden sind.

Zum Zerteilen der Doppel-Flachglasplatte 1 in die einzelnen Displayzellen 4 wird diese auf vorgegebenen Trennlinien zwischen den Außenkonturen der Kleberahmen 5 auf beiden Seiten mittels eines Lasers nach einem bekannten Verfahren geritzt. Dabei ist in vertikaler Richtung nur eine Trennlinie 6 erforderlich, da jeweils der Abstand "x" zwischen Trennlinie 6 und Außenkontur der Kleberahmen 5 gleich ist, d. h. insoweit eine Symmetrie besteht. In horizontaler Richtung sind dagegen auf der frontseitigen Glasplatte 2 zwei Trennlinien 7 zu ritzen, eine Trennlinie 7a jeweils an der unteren Rahmenkontur der oberen Displayzelle 4 und einer Trennlinie 7b in der jeweils oberen Rahmenkontur der vertikal benachbarten unteren Displayzelle 4. Durch diese beiden Trennlinien 7a, 7b ist gewährleistet, dass aus der frontseitigen Flachglasplatte 2 ein schmaler Streifen 2a zwischen den benachbarten horizontalen Displayzellenreihen herausgetrennt werden kann, damit auf der zugeordneten unteren Flachglasplatte 2 , wie insbesondere die Fig. 3 deutlich zeigt, ein Absatz 3a für die elektrische Anschlussleiste entsteht.

Die rückseitige Flachglasplatte 3 ist dabei nur entlang der Trennlinie 7b zu ritzen.

Im Gegensatz zu den vertikalen Trennlinien ist bei den horizontalen Trennlinien 7a und 7b eine Asymmetrie gegeben, wie in Fig. 1 durch die unterschiedlichen Abstandsmaße "x" und "y" zum Ausdruck gebracht worden ist.

Das erfindungsgemäße Zerteilen der Doppel-Flachglasplatte erfolgt wie nachstehend:

Zunächst werden auf einer Seite der Doppel-Flachglasplatte 1, vorzugsweise auf der frontseitigen Flachglasplatte 2, entlang den Trennungslinien 6 und 7 mit den vorgegebenen Abständen jeweils parallele Ritze erzeugt, und die Doppel-Flachglasplatte wird danach mit der geritzten Seite nach unten auf den sogenannten Brechtisch gelegt und mittels eines angelegten Vakuums fixiert. Im ersten Brechschritt wird anschließend die erste Richtung entlang der Trennlinie 6 mit dem ersten Werkzeug gebrochen. Dazu wird eine genau definierte Brechrolle 8, die in Fig. 2 in einer Seitenansicht und im Querschnitt dargestellt ist, exakt über den Laserritz mit geregelter Andruckkraft geführt. Die so eingebrachte mechanische Andruckkraft übt eine Zugspannung auf den Laserritz aus und treibt diesen durch die Dicke der Glasplatte hindurch, d. h. das Glas bricht vollständig.

Die Brechrolle 8 besteht typischerweise aus Hartgummi. Die Brechrolle bricht daher das Glas sehr sanft, zumal keine Schläge auf das Glas ausgeübt werden. Da das Rollenwerkzeug sehr schmal ist, können auch mehrere Brechrollen gleichzeitig parallel eingesetzt werden. Dabei wird die Andruckkraft jeder einzelnen Brechrolle getrennt geregelt. Durch den Parallel-Einsatz der Brechrollen kann das erste Brechen entlang der vertikalen Trennlinien 6 sehr schnell erfolgen, obwohl der Bruch sich nur mit der Rollenbewegung entlang der Ritzlinie öffnet.

Nach dem Brechen entlang der Trennlinien 6 mittels der Brechrolle(n) 8 wird im zweiten Schritt die weiterhin mit den Ritzen nach unten auf dem Brechtisch liegende Doppel-Flachglasscheibe 1 entlang der zweiten Richtung, d. h. der Brechlinien 7 gebrochen. Das dabei verwendete Brechwerkzeug ist das Brechschwert. Die verwendete Brechkraft von einem Brechschwert liegt dabei sehr viel höher als bei der Brechrolle, d. h. der Maschinenunterbau muss dementsprechend verstärkt ausgelegt werden. Allerdings verhindern Baugröße und Brechkraft den gleichzeitigen Einsatz von mehreren Brechschwertern in parallelen Brechlinien.

Da aufgrund der langgestreckten Klinge eines Brechschwertes über mehrere vertikale Trennlinien hinweg gebrochen wird, erfolgt jedoch auch das horizontale Brechen relativ schnell.

Es hat sich dabei gezeigt, dass es zweckmäßig ist, die Länge der Klinge des Brechschwertes nicht gleich der zugeordneten Abmessung der Flachglastafel, hier der horizontalen Breite, zu machen, weil dies insbesondere die Genauigkeit des Bruches beeinträchtigen würde. Vorteilhafter ist es, wie in Fig. 1 dargestellt, eine Brechschwert 9 mit kürzerer Klinge, die sich etwas mehr als über zwei vertikale Zeilen erstreckt, zu verwenden, und dieses Brechschwert beim Brechen eines horizontalen Ritzes, jeweils etwas überlappend, mehrfach anzusetzen, z. B. wie in Fig. 1 gezeigt, das Brechschwert 9 dreimal anzusetzen, mit der Vorderkante der Klinge jeweils bündig mit der zugeordneten vertikalen Brechlinie 6.

Auf diese Weise wird auch an den Kreuzungspunkten der Brechlinien 6 und 7 ein sauberer Bruch erzielt.

Das Brechen entlang der Ritzlinien 7 erfolgt auch im dargestellten Ausführungsbeispiel deshalb mit einem Brechschwert, weil mit dem Brechschwert die Möglichkeit besteht, asymmetrische Brüche auszuüben. Die Symmetrie im Bruchbereich bezieht sich dabei auf den Kleberahmen 5, der zwischen den Flachglasplatten aufgebracht ist. Aus Fig. 1 erkennt man, dass der Kleberahmen links wie rechts zu der Rollenbruchlinie 6 exakt den gleichen Abstand "x" hat. Diese Anordnung erlaubt den Einsatz einer Brechrolle.

In der horizontalen Richtung ist jedoch der Abstand der Brechlinien 7a, 7b zum zugeordneten Kleberahmen unterschiedlich (y > x) und damit asymmetrisch. Würde man entlang der Brechlinien 7a, 7b mit einer Brechrolle arbeiten, entstünde kein senkrechter Bruch, sondern ein Bruch, der ausgehend von dem senkrecht in das Glas eingeleiteten Laserriss mit sogenannten Lanzetten versehen ist. Beim Brechen mit dem Brechschwert wird dies vermieden, weil das Brechschwert den Bruch über die gesamte Schwertlänge zur gleichen Zeit öffnet, wogegen sich beim Brechen mit einer Brechrolle der Bruch mit dem Vorschub der Brechrolle öffnet.

Das Ergebnis des Schwertbruches ist jedoch letztlich von ähnlich guter Qualität wie die Bruchqualität beim Brechen mit der Brechrolle.

Nach dem Brechen der einen Flachglastafel wird die - noch zusammenhängende - Doppel-Flachglastafel 1 gewendet und es wird dann die zweite Flachglastafel entsprechend geritzt. Nach dem Ritzen wird die Doppel-Flachglastafel mit der geritzten Seite nach unten wiederum auf dem Brechtisch positioniert und eingespannt, und das Brechen erfolgt in gleicher Weise wie bei der ersten Flachglastafel.

Als Ergebnis erhält man sehr gute Kantenqualitäten, welche senkrecht und ohne Lanzetten ausgebildet sind.

Das Ritzen der Flachglasplatten erfolgt vorzugsweise mittel eines Laserstrahles. Es ist jedoch prinzipiell auch denkbar, die Flachglasplatten mechanisch zu ritzen, z. B. mittels eines konventionellen Schneidrädchens.

Mit dem erfindungsgemäßen Brechverfahren lassen sich mechanisch- oder lasergeritzte Werkstücke, insbesondere Displayzellen, welche aus zwei Glassubstraten bestehen und verklebt sind, mit zwei Werkzeugen in nur einer bestimmten Reihenfolge brechen. Das besondere an diesem Verfahren ist der Einsatz von zwei verschiedenen Werkzeugen die je nach Layout eingesetzt werden. Es handelt sich a) um eine Brechrolle, die meistens als erstes Werkzeug zum Einsatz kommt und b) um ein Brechschwert.

**Patentansprüche**

1. Verfahren zum mechanischen Brechen von nacheinander in zwei zueinander senkrecht stehenden Trennrichtungen mit jeweils vorgegebenen Abständen parallel geritzten, flachen Werkstücken aus sprödbrüchigem Material mittels eines Brechwerkzeuges, bei dem zum Brechen entlang der einen Trennrichtung (6) eine Brechrolle (8) und zum Brechen entlang der anderen Trennrichtung (7) ein Brechschwert (9) eingesetzt wird, **dadurch gekennzeichnet, dass** die Schwertlänge des Brechschwertes (9) kleiner als die kleinste horizontale Abmessung, nämlich Breite bzw. Länge, des zu zerteilenden flachen Werkstückes ist und dass das Brechschwert (9) in vorgegebenen überlappenden Schritten entlang der zugehörigen Trennlinie (7) eingesetzt wird.

2. Verfahren nach Anspruch 1, **dadurch gekennzeichnet, dass** das Ritzen entlang der Trennrichtungen (6, 7) mittels eines Lasers erfolgt.

3. Verfahren nach Anspruch 1, **dadurch gekennzeichnet, dass** das Ritzen entlang der Trennrichtungen (6, 7) mittels eines Schneidrädchens erfolgt.

4. Verfahren nach einem der Ansprüche 1 bis 3, **dadurch gekennzeichnet, dass** das mechanische Brechen manuell erfolgt.

5. Verfahren nach einem der Ansprüche 1bis 3, **dadurch gekennzeichnet, dass** das mechanische Brechen maschinell erfolgt.

6. Verfahren nach einem der Ansprüche 1 bis 5, **dadurch gekennzeichnet, dass** als flaches Werkstück eine Flachglastafel verwendet wird.

7. Verfahren nach einem der Ansprüche 1 bis 5, **dadurch gekennzeichnet, dass** als flaches Werkstück eine Doppel-Flachglastafel (1) verwendet wird, die aus zwei miteinander verbundenen Flachglastafeln (2, 3) gebildet ist.

8. Verfahren nach einem der Ansprüche 1 bis 7, **dadurch gekennzeichnet, dass** die Brechrolle (8) zum Brechen entlang von Trennlinien (6) mit symmetrischen Brüchen eingesetzt wird.

9. Verfahren nach einem der Ansprüche 1 bis 8, **dadurch gekennzeichnet, dass** das Brechschwert (9) zum Brechen entlang von Trennlinien (7) mit asymmetrischen Brüchen eingesetzt wird.

10. Verfahren nach Anspruch 7, Anspruch 7 und Anspruch 8 oder Anspruch 7 und Anspruch 9, **dadurch gekennzeichnet, dass** zunächst die eine Flachglastafel geritzt und gebrochen und danach die andere Flachglastafel geritzt und gebrochen wird.

**Claims**

1. Method for mechanically breaking flat workpieces made of brittle material, which are successively scored parallel in two mutually perpendicular cutting directions respectively with predetermined spacings, by means of a breaking tool, in which a breaking roll (8) is used for breaking along one cutting direction (6) and a breaking blade (9) is used for breaking along the other cutting direction (7), **characterized in that** the blade length of the breaking blade (9) is less than the smallest horizontal dimension, i.e. width or length, of the flat workpiece to be divided up, and **in that** the breaking blade (9) is used in predetermined overlapping steps along the associated cutting line (7).

2. Method according to Claim 1, **characterized in that** the scoring along the cutting directions (6, 7) is carried out by means of a laser.

3. Method according to Claim 1, **characterized in that** the scoring along the cutting directions (6, 7) is carried out by means of a cutting wheel.

4. Method according to one of Claims 1 to 3, **characterized in that** the mechanical breaking is carried out manually.

5. Method according to one of Claims 1 to 3, **characterized in that** the mechanical breaking is carried out by using a machine.

6. Method according to one of Claims 1 to 5, **characterized in that** a flat glass panel is used as the flat workpiece.

7. Method according to one of Claims 1 to 5, **characterized in that** a double flat glass panel (1), which is formed from two flat glass panels (2, 3) bonded together, is used as the flat workpiece.

8. Method according to one of Claims 1 to 7, **characterized in that** the breaking roll (8) is used for breaking along cutting lines (6) with symmetrical breaks.

9. Method according to one of Claims 1 to 8, **characterized in that** the breaking blade (9) is used for breaking along cutting lines (7) with asymmetrical breaks.

10. Method according to Claim 7, Claim 7 and Claim 8, or Claim 7 and Claim 9, **characterized in that** first one flat glass panel is scored and broken, and then the other flat glass panel is scored and broken.

**Revendications**

1. Procédé de rupture mécanique de pièces plates en matériau fragile, incisées parallèlement l'une après l'autre à des distances respectivement prédéterminées dans deux directions de séparation perpendiculaires l'une à l'autre, au moyen d'un outil de rupture, dans lequel on utilise un galet de rupture (8) pour la rupture le long d'une première direction de séparation (6) et une lame de rupture (9) pour la rupture le long de l'autre direction de séparation (7), **caractérisé en ce que** la longueur de lame de la lame de rupture (9) est plus petite que la plus petite dimension horizontale, à savoir la largeur ou la longueur, de la pièce plate à diviser et **en ce que** la lame de rupture (9) est utilisée dans des étapes prédéterminées avec recouvrement le long de la ligne de séparation correspondante (7).

2. Procédé selon la revendication 1, **caractérisé en ce que** l'on pratique l'incision le long des directions de séparation (6, 7) au moyen d'un laser.

3. Procédé selon la revendication 1, **caractérisé en ce que** l'on pratique l'incision le long des lignes de séparation (6, 7) au moyen d'une molette de coupe.

4. Procédé selon l'une quelconque des revendications 1 à 3, **caractérisé en ce que** l'on effectue manuellement la rupture mécanique.

5. Procédé selon l'une quelconque des revendications 1 à 3, **caractérisé en ce que** l'on effectue la rupture mécanique de manière mécanisée.

6. Procédé selon l'une quelconque des revendications 1 à 5, **caractérisé en ce que** l'on utilise comme pièce plate une feuille de verre plat.

7. Procédé selon l'une quelconque des revendications 1 à 5, **caractérisé en ce que** l'on utilise comme pièce plate une double feuille de verre plat (1), qui est formée de deux feuilles de verre plat (2, 3) assemblées l'une à l'autre.

8. Procédé selon l'une quelconque des revendications 1 à 7, **caractérisé en ce que** l'on utilise le galet de rupture (8) pour la rupture le long de lignes de séparation (6) avec des ruptures symétriques.

9. Procédé selon l'une quelconque des revendications 1 à 8, **caractérisé en ce que** l'on utilise la lame de rupture (9) pour la rupture le long de lignes de séparation (7) avec des ruptures asymétriques.

10. Procédé selon la revendication 7, la revendication 7 et la revendication 8 ou la revendication 7 et la revendication 9, **caractérisé en ce que** l'on incise et on rompt d'abord une première feuille de verre plat puis on incise et on rompt la deuxième feuille de verre plat.

## FIG. 1

## FIG. 2

## FIG. 3

**EP 1 726 572 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19649332
- DE 10016628 A1
- US 4277143 A
- EP 0872303 A2
- US 5609284 A
- EP 0062484 A1
- DE 10257544 A1
- US 20050061123 A1